# EUROPÄISCHE PATENTSCHRIFT

(11) **EP 0 595 152 B1**
(45) Veröffentlichungstag und Bekanntmachung des Hinweises auf die Patenterteilung: **17.12.1997**
(21) Anmeldenummer: 93116794.4
(22) Anmeldetag: 18.10.1993
(51) Int. Cl.: H04N 9/79, H04N 9/83

(54) **Kammfilterschaltung im wiedergabeseitigen Farbartkanal eines Videorecorders**
Comb filter circuit in the chrominance channel at the playback side of a video recorder
Circuit de filtre en peigne dans le canal de chrominance du côté reproduction d'un enregistreur vidéo

(30) Priorität: 24.10.1992 DE 4236019
(43) Veröffentlichungstag der Anmeldung: 04.05.1994
(73) Patentinhaber: NOKIA TECHNOLOGY GmbH, 75175 Pforzheim (DE)
(72) Erfinder: Reime, Gerd, D-75328 Schömberg 4 (DE)

(56) Entgegenhaltungen:
- EP-A- 0 293 188
- EP-A- 0 296 831
- DE-A- 4 022 923
- US-A- 4 796 096

## Beschreibung

Die Erfindung betrifft eine im wiedergabeseitigen Farbartkanal eines Videorecorders angeordnete Kammfilterschaltung nach dem Text des Oberbegriffes des Anspruches 1.

Herkömmliche Videorecorder zeichnen ein Farbvideosignal (FBAS-Signal) auf, das aus einem Helligkeitssignal (Y-Signal) und einem Chrominanz-Signal (Farbartsignal) besteht. Das Helligkeitssignal wird vor dem Aufzeichnen im Frequenzbereich begrenzt und frequenzmoduliert. Das Chrominanz-Signal wird vor dem Aufzeichnen in einen Frequenzbereich transponiert, der unterhalb des frequenzmodulierten Helligkeitssignales liegt. Jedes Videohalbbild wird dabei auf eine Schrägspur des Magnetbandes aufgezeichnet. Dabei liegen die aufeinanderfolgenden Zeilensignale der Videohalbbilder auf den benachbarten Schrägspuren ohne Zwischenraum dicht nebeneinander. Um bei der Wiedergabe das Übersprechen aus benachbarten Schrägspuren zu dämpfen, werden die Videoköpfe in der Kopftrommel mit entgegengesetzten Azimutwinkeln angeordnet. Die Azimutwinkeldämpfung wirkt jedoch im unteren Frequenzbereich unzureichend und das Übersprechen wird im Bereich des Chrominanzsignals relativ groß.

Um das Übersprechen im Chrominanzsignal zu kompensieren, ist bekannt, bei Wiedergabe im Chrominanzkanal ein Kammfilter anzuordnen, das aus einem Addierer und einer Verzögerungsschaltung besteht, die das Signal für die Dauer einer oder mehrerer Videozeilen verzögert. Mit diesem Kammfilter werden in Verbindung mit einem Umschalten der Phasenlage des Chrominanzsignals beim Aufzeichnen in einem bestimmten zeilenfrequenten Rhythmus die Übersprechkomponenten der addierten Signale weitestgehend ausgelöscht.

Bei einem derartigen Kammfilter ist jedoch von Nachteil, daß bei der Wiedergabe an den horizontalen Farbkanten zwischen Farbflächen unterschiedlicher Farbart (Farbton und Farbintensität) infolge einer Mittelwertbildung zwischen den zeitlich versetzten Zeilensignalen im Kammfilter Farbfehler auftreten können. Diese werden außerdem bei jedem Kopieren einer Aufzeichnung verbreitert und vertikal verschoben, so daß die bildliche Wiedergabe der Kopie farblich wesentlich fehlerhafter als die ursprüngliche Aufzeichnung erscheint.

Um diese Farbverzerrungen durch das Kammfilter auszuschalten, ist aus der Patentschrift DD-A- 206 521 bekannt, eine derartige horizontale Farbkante bei einem SECAM-Signal mit einem parallel zur Verzögerungsleitung des Kammfilters angeordneten Phasenvergleicher zu detektieren und im Fall einer detektierten Farbkante das verzögerte Eingangssignal vom Eingang des Addierers zu trennen. Dadurch ist für diese Zeit das Kammfilter ohne Filterwirkung.

Dieses Verfahren geht davon aus, daß das beim Phasenvergleich entstehende Fehlersignal ein Maß für die Ähnlichkeit der Farbsignale der Zeilen ist. Diese gilt entsprechend dem genannten Dokument nur dann, wenn das Verhältnis der Verzögerungszeit der Verzögerungsschaltung zur Periodenzeit der verzögerten Schwingungen eine ganze Zahl ist. Die Wirkung der bekannten Anordnung beschränkt sich somit auf einen sehr engen Arbeitsbereich, bei dem die vorgenannte Bedingung für den Phasenvergleich wenigstens angenähert eingehalten wird. Dies trifft nur für einen kleinen Anteil der Übertragung zu, so daß Bildstörungen nur bedingt gemindert werden.

Zum weiteren Vermindern von Bildstörungen ist aus dem genannten Dokument weiterhin bekannt, parallel zum Addierer des Kammfilters einen Subtrahierer anzuordnen und das jeweils größere Ausgangssignal des Addierers oder Subtrahierers einer weiteren Addierstufe zuzuführen. Es erfolgt eine selbsttätige Auswahl von Summen- oder Differenzsignal am Ausgang der Schaltung.
Diese Kammfilterschaltung überträgt bei gleichphasig addierten oder gegenphasig subtrahierten Chrominanzsignalen das Eingangssignal mit voller Wirkung. Dadurch werden die Übersprechkomponenten zwischen benachbarten Videozeilen auch bei größeren Phasenabweichungen beseitigt. Auch bei diesem Filter können jedoch Farbstörungen an waagerechten Farbkanten mit intensivem Farbkontrast auftreten.

Aus der Patentschrift EP-A-0 296 831 ist ein weiteres spannungsgesteuertes Kammfilter bekannt. Dieses besteht aus einer linearen Mischschaltung und einer Verzögerungschaltung, die gleichzeitig als Inverter wirkt. Das Wiedergabe- Chrominanzsignal wird für die Dauer einer Zeile verzögert und invertiert. Das unverzögerte und das verzögerte Chrominanzsignal werden den Eingängen der Mischschaltung zugeführt, welche daraus ein Ausgangssignal bildet, bei dem das Übersprechen proportional in Abhängigkeit von einem Stellsignal kompensiert wird.

Dieses Stellsignal wird aus einem Fehlersignal, das einen Zeilenkorrellationsfehler anzeigt, gewonnen. Dafür wird entweder das Wiedergabe-Luminanzsignal oder das Wiedergabe-Chrominanzsignal einem zweiten Kammfilters zugeführt, das eine weitere Verzögerungsschaltung und einem Subtrahierer enthält. Ein Verstärker mit gegenphasigen Ausgängen erzeugt aus dem Ausgangssignal des zweiten Kammfilters zwei gegenphasige Signale, die dem Zeilenkorrellationsfehler entsprechen. Diese Signale wandelt ein Vollwellengleichrichter in ein entsprechendes Stellsignal um, mit dem die Mischschaltung, die aus zwei parallellen stromgesteuerten Differenzverstärkerstufen besteht, angesteuert wird.

Bei dieser bekannten Lösung ist von Nachteil, daß für eine zuverlässige Funktion ein hoher Aufwand zum Abgleichen der Schaltung und hohe Anforderungen an die Pegelstabilität des Wiedergabe-Chrominanzsignals gestellt werden.

Aus diesem Grunde ist in der unter die Bestimmungen des Artikels 54(3) EPÜ fallenden Europäischen Patentanmeldung EP-A-0 512 370 (Patentfamilienmitglied der nicht vorveröffentlichten Patentanmeldung DE-A-41 15 213) vorgeschlagen, die Ausgänge einer Additionsschaltung und einer Subtraktionsschaltung eines Kammfilters mit einer Detektionsschaltung zu verbinden, die im Gegensatz zur vorgenannten Lösung die Hüllkurven beider Ausgangssignale vergleicht, um dann ein Schaltsignal zu erzeugen, wenn die Hüllkurve des Subtraktionssignales größer ist, als die Hüllkurve des Additionssignales. Diese Kammfilterschaltung ist so gestaltet, daß z. B. bei einem Chrominanz-Signal-Sprung an einer horizontalen Farbkante vom Wert für Weiß zum Wert einer gesättigten Farbe für die Dauer der folgenden Zeilen die Amplitude der Hüllkurve des Subtraktionssignales größer ist als die Amplitude der Hüllkurve des Additionssignales.

Der Vorschlag geht davon aus, daß bei der Wiedergabe der Pegel des Nutzsignales immer größer ist, als der Pegel der Übersprechkomponente und daß bei diesem Kammfilter auch bei kleinem Pegel des Chrominanzsignales an horizontalen Farbkanten mit intensivem Farbkontrast die genannten Amplitudenverhältnisse auftreten.

Die vorgeschlagene Kammfilterschaltung schaltet zwischen dem Ausgang des Kammfilters und dem Eingang der Schaltung entsprechend dem Bildinhalt so um, daß bei normaler Betriebsart das Wiedergabe-Chrominanzsignal weitgehend ohne Bildstörungen wiedergegeben wird.
In den meisten Fällen der Wiedergabe eines solchen verbesserten Videosignals ist ein Übersprechen, das an den beschriebenen Farbkanten auftritt, kaum wahrnehmbar, da es für den Betrachter empfindungsgemäß vom Farbübergang überdeckt wird.

Es hat sich jedoch herausgestellt, daß bei einigen Arten des Wiedergabebetriebes, insbesondere beim Suchlauf oder bei Betriebsarten mit reduzierter Bandgeschwindigkeit bzw. Bandstillstand infolge von Trackingfehlern Übersprechkomponenten mit einem Pegel auftreten können, der in der Nähe des Pegels des Nutzsignales liegt, obwohl keine Farbkanten mit intensivem Farbkontrast vorliegen. Zu dieser Zeit wird das Kammfilter ebenfalls abgeschaltet. Dieses verursacht unnötige Bildfehler.

Der Erfindung liegt die Aufgabe zugrunde, eine Kammfilterschaltung gemäß dem Text des Oberbegriffes des Anspruches 1 derart auszugestalten, daß das Kammfilter auch bei den eben genannten Betriebsarten der Wiedergabe in Betrieb ist. Diese Aufgabe wird nach der Erfindung durch die im Text des Anspruches 1 angegebenen Merkmale vorteilhaft gelöst.

Durch die erfindungsgemäße Weiterbildung der vorgeschlagenen Kammfilterschaltung wird das Kammfilter nur im Bereich von horizontalen Farbkanten mit intensivem Farbkontrast abgeschaltet, während es bei die Wiedergabe von Farbflächen im Betrieb bleibt.

Besonders vorteilhaft kann für den Signalschalter zum Umschalten des Kammfilters eine kontinuierlich einstellbare Überblendeinrichtung verwendet werden. Der Vergleich der Hüllkurven erfolgt dann der Art, daß ein analoges Stellsignal ensteht, welches der Abweichung der Hüllkurven voneinander entspricht. Dieses Stellsignal bewirkt, daß die Überblendeinrichtung dann einen größeren Anteil des ungefilterten Eingangssignales überträgt, wenn die Hüllkurve des Subtraktionssignales größer ist als die des Additionssignales.

Dadurch überträgt einerseits die Kammfilterschaltung ein vom Kammfilter unbeeinflußtes Wiedergabe-Chrominanzsignal wenn die beschriebenen Farbkanten mit intensivem Farbkontrast vorhanden sind. Andererseits wird bei Farbkanten mit geringem Farbkontrast der Einfluß des Kammfilters in Abhängikkeit von der Intensität des Kontrastes erhöht, so daß in diesem Fall die stärker störenden Übersprechkomponente gemindert wird. Die übrigen Unteransprüche kennzeichnen weitere vorteilhafte Ausgestaltungen der Erfindung.

Die Erfindung wird nachfolgend anhand eines vorteilhaften Ausführungsbeispieles näher erläutert. In den Zeichnungen zeigen:
- Figur 1: ein Blockschaltbild einer Kammfilterschaltung ohne zusätzliches Kammfilter,
- Figur 2a und Figur 2b: Diagramme a) bis m) zur Darstellung der Funktionsabläufe der in den Figuren 1 und 3 dargestellten Kammfilterschaltungen und
- Figur 3: ein Blockschaltbild einer Kammfilterschaltung gemäß der Erfindung.

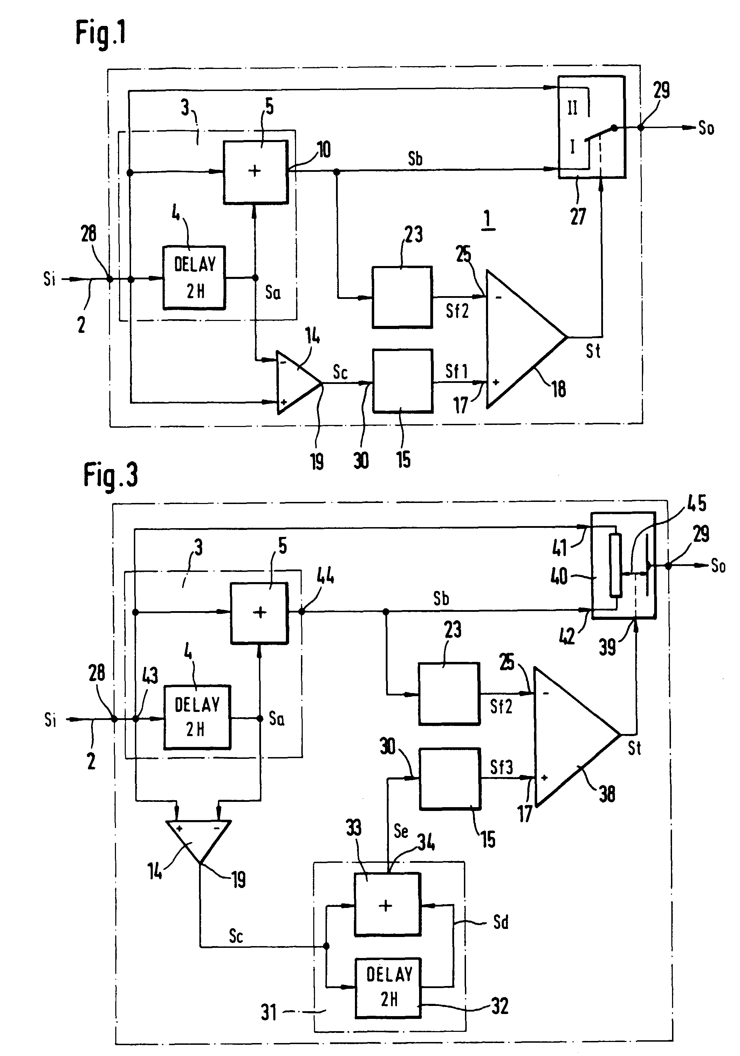

Die Figur 1 zeigt eine Kammfilterschaltung 1, welche ein Wiedergabe-Chrominanzsignal überträgt, in einem nicht näher dargestellten wiedergabeseitigen Farbartkanal 2 eines Videorecorders.

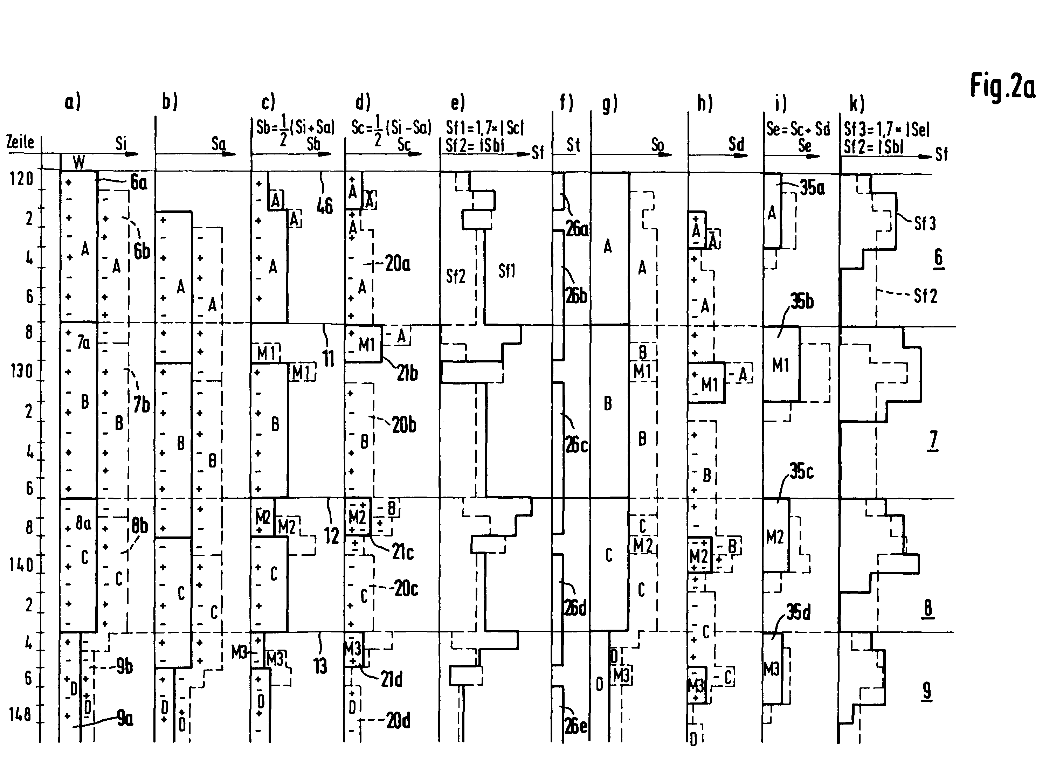

Die Kammfilterschaltung 1 enthält ein erstes Kammfilter 3 mit einer Verzögerungsschaltung 4 und einem Addierer 5, der das arithmetische Mittel aus dem unverzögerten Eingangssignal Si und dem verzögerten Eingangssignal Sa bildet. Die Verzögerungsschaltung 4 verzögert im dargestellten Ausführungsbeispiel das Eingangssignal Si für die Dauer von exakt zwei Videozeilen. Die Wirkung des bekannten Kammfilters 3 ist in den Diagrammen a) bis c) der Figur 2a dargestellt. Das Chrominanzsignal wird in einer systembedingten und zeilensynchronen Wechselfolge der Phasenlage aufgezeichnet.

Das Diagramm a) zeigt das Prinzip der Anordnung eines Chrominanzsignals eines Videobildmusters beispielsweise in den Zeilen 120 bis 149. Im Videobildmuster folgen in vertikaler Richtung vier Farbflächen mit den Farben A, B, C und D einer weißen Fläche W.

Die Blöcke 6a, 7a, 8a und 9a stellen den Pegel des Wiedergabe-Nutzsignales für die jeweiligen Farben dar. Die Blöcke 6b, 7b, 8b und 9b stellen den Pegel der Übersprechkomponenten aus den Nachbarspuren dar. Im Ausführungsbeispiel wechselt die Phase des Chrominanzsignals von Zeile zu Zeile um 180°. Dieses ist durch die Zeichen + und - angedeutet. Im Beispiel beträgt der Pegel der Übersprechkomponente 75 % des Pegels des Nutzsignales.

Durch den systembedingten Zeilenversatz der benachbarten Spuren ist die Übersprechkomponente gegenüber dem Nutzsignal um die Dauer einer Zeile versetzt. In der Nachbarspur ist die Phase des Chrominanzsignals jeweils nach zwei Zeilen um 180° gedreht. Das Diagramm c) stellt den Pegel des Additionssignales Sb am Ausgang 10 des Kammfilters 3 dar. Im Kammfilter werden in den Farbflächen der vier Farben die gegenphasigen Übersprechkomponenten ausgelöscht, während an den horizontalen Farbkanten 11, 12 und 13 mehrere Zeilen mit Mischfarben M1, M2 oder M3 auftreten.

Um diese störenden Mischfarben zu vermeiden, enthält die Kammfilterschaltung 1 einen Subtrahierer 14, der das verzögerte Eingangssignal Sa vom unverzögerten Eingangssignal Si subtrahiert und über einen Hüllkurvendemodulator 15 dem nichtinvertierenden Eingang 17 einer Differenzschaltung 18 zuführt. Das Subtraktionssignal Sc am Ausgang 19 enthält das arithmethische Mittel der Übersprechkomponenten des unverzögerten (Si) und des verzögerten Eingangssignales Sa. Dieses zeigen die gestrichelten Pegelblöcke 20a, 20b, 20c und 20d im Diagramm d). Außerdem entstehen an den Farbkanten 11 bis 13 Mischfarbenblöcke 21b, 21c und 21d.

Der Hüllkurvendemodulator 15 bildet aus dem Subtraktionssignal Sc ein im dargestellten Beispiel um den Faktor 1,7 verstärktes Hüllkurvensignal Sf1. Mittels eines zweiten Hüllkurvendemodulators 23 wird aus dem Additionssignal Sb ein Hüllkurvensignal Sf2 gewonnen, das dem invertierenden Eingang 25 der Differenzschaltung 18 zugeführt ist.

Der Verlauf der Signale ist im Diagramm e) gezeigt. Die Differenzschaltung 18 erzeugt immer dann, wenn der Pegel des verstärkten Hüllkurvensignales Sf1 größer ist als der Pegel des Hüllkurvensignals Sf2, ein Steuersignal St zum Umschalten auf das direkte Eingangssignal Si. Dieses ist im Diagramm f) durch die Balken 26a bis 26e dargestellt. Bei dem hohen Anteil des Übersprechens ist das Hüllkurvensignal Sf1 auch dann, wenn keine Farbkanten mit intensivem Farbkontrast auftreten, größer als das Hüllkurvensignal Sf2, so daß der Signalumschalter 27, welcher der Differenzschaltung 18 folgt, überwiegend direkt zum Eingang 28 der Kammfilterschaltung umschaltet, in der das Eingangssigal Si ungefiltert zum Ausgang 29 gelangt, wie Diagramm g) zeigt. Damit ist das Kammfilter auch dann, wenn dieses unerwünscht ist, wirkungslos. Um diesen Mangel zu verhindern, ist in der in Figur 3 dargestellten Kammfilterschaltung entsprechend der Erfindung, zwischen dem Ausgang 19 des Subtrahierers 14 und dem Eingang 30 des Hüllkurvendemodulators 15 ein weiteres Kammfilter 31 geschaltet, das im Aufbau dem ersten Kammfilters 3 gleicht. Das Kammfiter 31 überträgt an den Signalausgang 34 ein Subtraktionsignal, das vom Übersprechen befreit ist und nur noch in wenigen Zeilen nach einer Farbkante 11, 12 oder 13 Signalanteile 35a bis 35d enthält. Dieses Signal Se ist im Diagramm i) dargestellt. Vom Signal Se, das ebenfalls vorteilhaft gegenüber dem Additionssignales Sb um etwa das 1,7fache verstärkt wird, damit es bei einander entsprechenden Pegeln gegenüber dem Additionssignal Sb größer ist, bildet der Hüllkurvendemodulator 15 ein Hüllkurvensignal Sf3, dessen Verlauf im Diagramm k) dargestellt ist. Außerdem ist im Diagramm der Verlauf des Hüllkurvensignales Sf2 dargestellt.

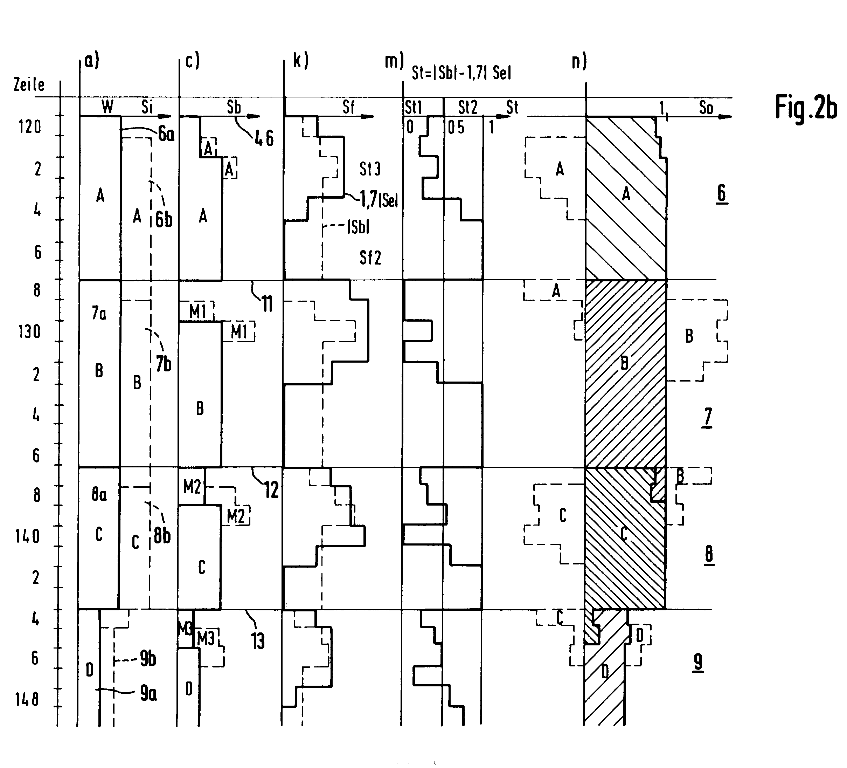

Das Diagramm k) ist zusammen mit den Diagrammen a) und c) für das Eingangssignal Si und das Additionssignal Sb nochmals in Figur 2b dargestellt.
Die beiden Hüllkurvensignale Sf2 und Sf3 werden den Eingängen 25 und 17 einer Differenzschaltung 38 zugeführt, die sich von der Differenzschaltung 18 der Kammfilterschaltung 1 gemäß Figur 1 dadurch unterscheidet, daß sie ein kontinuierliches analoges Stellsignales St erzeugt. Dieses zeigt Diagramm m). Der Verlauf des Pegels dieses Stellsignales St entspricht dem Verlauf der Abweichungen der beiden Hüllkurven Sf2 und Sf3 voneinander und kann zwischen zwei Grenzwerten St1 und St2 liegen. Im Beispiel liegt der Pegel des Stellsignal St zwischen den Werten 0 und 1.

Dieses Stellsignal St wird dem Stelleingang 39 einer elektronischen Überblendeinrichtung 40 zugeführt, die die Funktion des Signalumschalters 27 übernimmt und deren Eingänge 41 und 42 mit dem Eingang 28 bzw. dem Ausgang 44 des eingangsseitigen Kammfilters 3 verbunden sind. Die Überblendeinrichtung 40 überträgt dann, wenn die Pegel der Hüllkurvensignale Sf2 und Sf3 gleich sind, das Eingangssignal Si und das im Kammfilter 3 gebildete Additionssignal Sb zu gleichen Teilen als Ausgangssignal So an den Signalausgang 29 der Kammfilterschaltung. Ist der Pegel des Hüllkurvensignales Sf3 größer als der Pegel der Hüllkurvensignals Sf2, wird die Überblendeinrichtung so verstellt, daß der Anteil des vom Kammfilter unbeeinflußten Eingangssignales Si im Ausgangssignal So der Kammfilterschaltung ebenfalls zunimmt. Die elektronische Überblendeinrichtung 40 folgt den Schaltflanken des Stellsignales St mit der gleichen Geschwindigkeit wie ein Signalumschalter 27, jedoch mit dem Vorteil, daß das Umschalten fließend ohne Umschaltstörungen erfolgt. Beim Übertragen und Abbilden des Chrominanzsignals einer Farbfläche, das sowohl Signalanteile vom Eingang als auch vom Ausgang eines Kammfilters enthält, werden die Rauschanteile der beiden Signalarten weitgehend kompensiert, ohne daß sich die verbleibenden Übersprechanteile wesentlich bemerkbar machen. Dies gilt insbesondere für Chrominanzsignale mit kleinem Pegel, die sehr stark rauschbehaftet sind.

Im Diagramm n) ist das mit dem Stellsignal St gesteuerte Ausgangssignal So der Kammfilterschaltung dargestellt. Die vom eingangsseitigen Kammfilter 3 gefilterten Signalanteile des Ausgangssignales So der Kammfilterschaltung zeigt das Diagramm n) schraffiert. Daraus ist zu erkennen, daß bei der Schaltung entsprechend der Erfindung selbst bei sehr großen Übersprechanteilen aus den Nachbarspuren das eingangsseitige Kammfilter 3 beim Übertragen von Farbflächen stets wirksam geschaltet ist. Außerdem treten an den Farbkanten 11, 12 und 13 sowie am Übergang 46 keine für den Betrachter nennenswert bemerkbare Störungen auf.

Die dargestellten Beispiele beziehen sich auf ein Aufzeichnungsverfahren, bei dem ein Kammfilter mit einer Verzögerung um zwei Zeilen und einem entsprechenden Phasenverlauf der Zeilensignale angewendet wird. Bei einem anderen Phasenverlauf des Zeilensignals, z.B. Signale für einzeilig verzögernde Kammfilter, ist die Verzögerungsschaltung 4 durch eine andere mit entsprechender Verzögerung zu ersetzen.

## Patentansprüche

1. Im wiedergabeseitigen Farbartkanal (2) eines Videorecorders angeordnete Kammfilterschaltung (1) die folgende Baugruppen enthält:
- ein erstes Kammfilter (3), bestehend aus einer Verzögerungsschaltung (4), die wenigstens um die Dauer einer Videozeile verzögert, und einem Addierer (5), der aus einem unverzögerten Eingangssignal (Si) und einem verzögerten Eingangssignal (Sa) ein Additionssignal (Sb) bildet, welches das Ausgangssignal des ersten Kammfilters darstellt und das frei von Übersprechen ist,
- einen Subtrahierer (14), der aus dem unverzögerten Eingangssignal (Si) und dem verzögerten Eingangssignal (Sa) ein Subtraktionssignal (Sc) bildet,
- je einen Hüllkurvendemodulator (15, 23) am Ausgang vom Addierer und vom Subtrahierer, der Hüllkurvensignale (Sf1, Sf2) aus dem Additionssignal (Sb) bzw. dem Subtraktionssignal (Sc) bildet,
- eine Differenzschaltung (18, 38) zum Vergleichen der Hüllkurvensignale (Sf1, Sf2), die ein Stellsignal (St) erzeugt, wenn die Hüllkurve des Subtraktionssignals größer ist als die Hüllkurve des Additionssignals (Sc),
- einen Signalumschalter (27), an dessen Ausgang abhängig vom Stellsignal (St) das Eingangssignal oder das Ausgangssignal des ersten Kammfilters vorliegt,
**gekennzeichnet** durch ein zweites Kammfilter (31), das zwischen dem Ausgang (19) des Subtrahierers (14) und dem Eingang (17) der Differenzschaltung (38) angeordnet ist und eine Verzögerungsschaltung (32) enthält, welche die gleiche Verzögerung aufweist wie diejenige des ersten Kammfilters.

2. Kammfilterschaltung nach Anspruch 1,
**dadurch gekennzeichnet,**
daß an den Eingängen der Differenzschaltung (38) zum Vergleich der Hüllkurven der Übertragungspegel für das Subtraktionssignal (Sc) etwa um das 1,5 bis 1,8-fache größer ist als der des Additionssignales (Sb).

3. Kammfilterschaltung nach Anspruch 1,
**dadurch gekennzeichnet**
- daß der Signalumschalter (27) eine elektronische Überblendeinrichtung (40) ist, deren Überblendstrecke (41 - 42) zwischen dem Signaleingang (43) und dem Signalausgang (44) des eingangsseitigen Kammfilters (3) angeordnet ist und die mittels eines Stellsignales (St) kontinuierlich verstellbar ist,
- und daß die Differenzschaltung (38) ein Stellsignal (St) erzeugt, das im Verlauf des Stellpegel (St) dem Verlauf der Abweichung der Hüllkurven voneinander entspricht, so daß die Überblendeinrichtung (40) einen größeren Anteil des ungefilterten Eingangssignales (Si) überträgt, wenn der Pegel des Subtraktionssignals (Sc) größer ist, als der Pegel des Additionssignales (Sb).

## Claims

1. A comb-filter circuit (1) which is disposed in the playback-side chrominance channel (2) of a video recorder and which contains the following units:
- a first comb filter (3) comprising a delay circuit (4) which produces a delay of at least the duration of a video line and an adder (5) which forms, from an undelayed input signal (Si) and a delayed input signal (Sa), an addition signal (Sb) which is the output signal of the first comb filter and is free from crosstalk,
- a subtracter (14) which forms a subtraction signal (Sc) from the undelayed input signal (Si) and the delayed input signal (Sa),
- an envelope-curve demodulator (15, 23) at the output in each case of the adder and of the subtracter, which envelope-curve demodulator (15, 23) forms envelope-curve signals (Sf1, Sf2) from the addition signal (Sb) and the subtraction signal (Sc), respectively,
- a differential circuit (18, 38) for comparing the envelope-curve signals (Sf1, Sf2) which generates an actuating signal (St) if the envelope curve of the subtraction signal (Sc) is greater than the envelope curve of the addition signal (Sb),
- a signal switch (27) at whose output the input signal or the output signal of the first comb filter is present, depending on the actuating signal (St),
characterized by a second comb filter (31) which is disposed between the output (19) of the subtracter (14) and the input (17) of the differential circuit (38) and contains a delay circuit (32) which has the same delay as that of the first comb filter.

2. Comb filter circuit according to Claim 1,
characterized in that the transmission level for the subtraction signal (Sc) is about 1.5 to 1.8 times greater than the addition signal (Sb) at the inputs of the differential circuit (38) for comparing the envelope curves.

3. Comb filter circuit according to Claim 1,
characterized
- in that the signal switch (27) is an electronic cross-fading device (40) whose cross-fading path (41 - 42) is disposed between the signal input (43) and the signal output (44) of the input-side comb filter (3) and which is continuously adjustable by means of an actuating signal (St),
- and in that the differential circuit (38) generates an actuating signal (St) which, in the variation of the actuating level (St) corresponds to the variation of the deviation of the envelope curves from one another so that the cross-fading device (40) transmits a greater proportion of the unfiltered input signal (Si) if the level of the subtraction signal (St) is greater than the level of the addition signal (Sb).

## Revendications

1. Circuit (1) de filtrage en peigne disposé dans le canal (2) de chrominance côté reproduction d'un enregistreur vidéo et comprenant les sous-groupes suivants :
- un premier filtre (3) en peigne constitué d'un circuit (4) de retard dont le retard correspond au moins à la durée d'une ligne vidéo, et d'un additionneur (5) qui, à partir d'un signal (Si) d'entrée non retardé et d'un signal (Sa) d'entrée retardé, forme un signal (Sb) d'addition qui constitue le signal de sortie du premier filtre en peigne et est exempt de diaphonie,
- un soustracteur (14) qui forme un signal (Sc) de soustraction à partir du signal (Si) d'entrée non retardé et du signal (Sa) d'entrée retardé,
- un démodulateur (15, 23) d'enveloppe à la sortie de l'additionneur et à la sortie du soustracteur, lequel démodulateur d'enveloppe forme des signaux (Sfl, Sf2) d'enveloppe à partir du signal (Sb) d'addition et du signal (Sc) de soustraction,
- un circuit (18, 38) différenciateur qui est destiné à comparer les signaux (Sf1, Sf2) d'enveloppe et qui produit un signal (St) de réglage lorsque l'enveloppe du signal de soustraction est plus grande que l'enveloppe du signal (Sc) d'addition,
- un commutateur (27) de signal à la sortie duquel on a, en fonction du signal (St) de réglage, le signal d'entrée ou le signal de sortie du premier filtre en peigne,
**caractérisé** par un second filtre (31) en peigne qui est disposé entre la sortie (19) du soustracteur (14) et l'entrée (17) du circuit (38) différenciateur et qui contient un circuit (32) de retard qui présente le même retard que celui du premier filtre en peigne.

2. Circuit de filtrage en peigne selon la revendication 1, **caractérisé** en ce que aux entrées du circuit (38) différenciateur destiné à comparer les enveloppes, le niveau de transmission du signal (Sc) de soustraction est de 1,5 à 1,8 fois supérieur à celui du signal (Sb) d'addition.

3. Circuit de filtrage en peigne selon la revendication 1, **caractérisé** en ce
- que le commutateur (27) de signal est un dispositif (40) électronique de mélange dont la ligne (41 - 42) de mélange est disposé entre l'entrée (43) de signal et la sortie (44) de signal du filtre (3) en peigne du côté entrée et qui est réglable en continu au moyen d'un signal (St) de réglage,
- et que le circuit (38) différenciateur produit un signal (St) de réglage dont l'évolution du niveau (St) de réglage correspond à l'évolution de l'écart des enveloppes entre elles de sorte que le dispositif (40) de mélange transmet une plus grande partie du signal (Si) d'entrée non filtré lorsque le niveau du signal (Sc) de soustraction est supérieur au niveau du signal (Sb) d'addition.
